Europäisches Patentamt

**European Patent Office**

Office européen des brevets

(11) Veröffentlichungsnummer: **0 071 694**
B1

(12) **EUROPÄISCHE PATENTSCHRIFT**

(45) Veröffentlichungstag der Patentschrift:
03.07.85

(21) Anmeldenummer: 82100293.8

(22) Anmeldetag: 16.01.82

(51) Int. Cl.⁴: **G 01 L 21/10**

(54) **Wärmeleitungsvakuummeter.**

(30) Priorität: 04.08.81 DE 3130817

(43) Veröffentlichungstag der Anmeldung:
16.02.83 Patentblatt 83/7

(45) Bekanntmachung des Hinweises auf die Patenterteilung:
03.07.85 Patentblatt 85/27

(84) Benannte Vertragsstaaten:
CH FR GB IT LI NL SE

(56) Entgegenhaltungen:
FR - A - 1 425 001
US - A - 1 971 423

**JOURNAL OF PHYSICS E. SCIENTIFIC INSTRUMENTS, Band 5, Nr. 5, Mai 1972, Seiten 405,406, London, G.B. W. STECKELMACHER et al.: "Extension of range of thermal conductivity vacuum gauge to atmospheric pressure by natural convection"**

(73) Patentinhaber: **Leybold-Heraeus GmbH, Bonner Strasse 504 Postfach 51 07 60, D-5000 Köln 51 (DE)**

(72) Erfinder: **Reich, Günter, Dr., Vochemer Strasse 9, D-5000 Köln 51 (DE)**

(74) Vertreter: **Leineweber, Jürgen, Am Heidstamm 78a, D-5000 Köln 40 (DE)**

ACTORUM AG

## Beschreibung

Die vorliegende Erfindung betrifft ein Wärmeleitungsvakuummeter mit mindestens einem eintemperaturabhängiges Widerstandselement enthaltenden Messkopf, einem ein Anzeigegerät sowie eine Speisestromquelle enthaltenden Bedienungsgerät und einem mehrere Leitungen enthaltenden Verbindungskabel sowie mit einem Speisestromkreis und einem Messstromkreis, wobei der Speisestromkreis einen im Bedienungsgerät liegenden Teil sowie einen im Messkopf liegenden Teil und der Messstromkreis einen im Bedienungsgerät liegenden Teil sowie einen im Messkopf liegenden Teil aufweisen.

Wärmeleitungsvakuummeter nutzen die Tatsache aus, dass bei höheren Gasdrücken, also grössere Teilchenzahldichte mehr Wärme von einem temperaturabhängigen Widerstandselement abgeführt wird als bei niedrigeren Gasdrücken. Beim Wärmeleitungsvakuummeter nach Pirani ist das Widerstandselement ein Messdraht, der in eine Wheatstonesche Brücke eingeschaltet ist. Beim ungeregelten Pirani-Vakuummeter bewirkt eine Widerstandsänderung des Messdrahtes eine Verstimmung der Brücke, die als Mass für den Druck herangezogen wird. Beim geregelten Pirani wird die an der Brücke liegende Speisespannung ständig so geregelt, dass der Widerstand und damit die Temperatur des Messdrahtes unabhängig von der Wärmeabgabe konstant ist. Das bedeutet, dass die Brücke immer abgeglichen ist. Bei vorbekannten geregelten Pirani-Vakuummetern wird als Mass für den Druck die an der Brücke anliegende Spannung herangezogen.

Bei Wärmeleitungsvakuummetern, die nach dem thermoelektrischen Prinzip arbeiten, sind als temperaturabhängige Widerstandselemente ein oder mehrere Thermoelemente vorgesehen, durch die ebenfalls ein Speisestrom fliesst. Derartige Wärmeleitungsvakuummeter können ebenfalls ungeregelt oder geregelt sein.

Aus der US-A Nr. 1971423 ist ein Wärmeleitungsvakuummeter der eingangs genannten Art bekannt. Das Verbindungskabel zwischen Messkopf und Bedienungsgerät enthält vier Leitungen, von denen zwei der Energieversorgung des Messkopfes und die weiteren zwei der Übertragung der Messsignale dienen. Bei diesem Wärmeleitungsvakuummeter besteht der Nachteil, dass wegen der Notwendigkeit der Übertragung von geringen Spannungsschwankungen vom Messkopf zum Bedienungsgerät seine Messgenauigkeit vom Leitungswiderstand der Leitungen abhängig ist. Darüber hinaus ist die Übertragung kleiner Messspannungen störempfindlich, insbesondere dann, wenn der Ort, an dem der Druck gemessen oder überwacht werden soll, verhältnismässig weit vom Bedienungsgerät entfernt liegt.

Weiterhin sind aus Journal of Physics E. Scientific Instruments, Band 5, Nr. 5, Mai 1972, S. 405, 406, London, G.B., W. Steckelmacher et al.: „Extension of range of thermal conductivity vacuum gauge to atmospheric pressure by natural convection", und der FR-A Nr. 1425001 Wärmeleitungsvakuummeter bekannt. Eine räumliche Unterteilung in Messkopf und Bedienungsgerät ist nicht offenbart. Die Verbindungsleitungen zwischen dem Messbereich und dem Anzeigebereich sind kurz und ebenfalls jeweils separat (für die Energieversorgung und die Übertragung von Messsignalen) vorgesehen.

Der vorliegenden Erfindung liegt die Aufgabe zugrunde, ein Wärmeleitungsvakuummeter der eingangs genannten Art so auszubilden, dass die Anzahl der Verbindungsleitungen zwischen dem Messkopf und dem Bedienungsgerät möglichst klein ist, mit dem Ziel, dadurch die Messgenauigkeit zu verbessern. Erfindungsgemäss wird diese Aufgabe dadurch gelöst, dass für die im Bedienungsgerät befindlichen Teile des Messstromkreises und des Speisestromkreises ein und derselbe Teilstromkreis verwendet wird. Diese Massnahmen ermöglichen es, den Messkopf und das Bedienungsgerät lediglich mit zwei Leitungen zu verbinden, über die lediglich die Summe der beiden Ströme (Speisestrom, Messstrom) übertragen werden muss. Damit werden Messgrösse und Speisestrom unabhängig von Leitungs- und Kontaktwiderständen, so dass Schwankungen der Messgenauigkeit in Abhängigkeit von Leitungswiderständen nicht mehr auftreten. Auch die Störanfälligkeit ist in erheblichem Masse reduziert.

Ein weiterer Vorteil ergibt sich bei Wärmeleitungsvakuummetern, an die mehrere Messköpfe anschliessbar sind. Für die Bildung der Speisestromkreise und Messstromkreise ist nur noch eine gemeinsame Hinleitung und pro Messkopf nur eine Rückleitung erforderlich, so dass bei N Messköpfen lediglich N + 1 Leitungen an das Bedienungsgerät angeschlossen werden müssen. Bisher waren dazu mindestens 2 N Leitungen erforderlich.

Weitere Vorteile und Einzelheiten der Erfindung sollen anhand von in den Fig. 1 bis 9 dargestellten Ausführungsbeispielen erläutert werden. Es zeigen:

Fig. 1 ein ungeregeltes Pirani-Vakuummeter,

Fig. 2 ein geregeltes Pirani-Vakuummeter,

Fig. 3 ein Wärmeleitungsvakuummeter mit einem Bedienungsgerät und mehreren Messköpfen,

Fig. 4 und 5 ein ungeregeltes bzw. geregeltes, nach dem thermoelektrischen Prinzip arbeitendes Wärmeleitungsvakuummeter, und

Fig. 6 bis 9 verschiedene Ausführungen von Messwertaufnehmern.

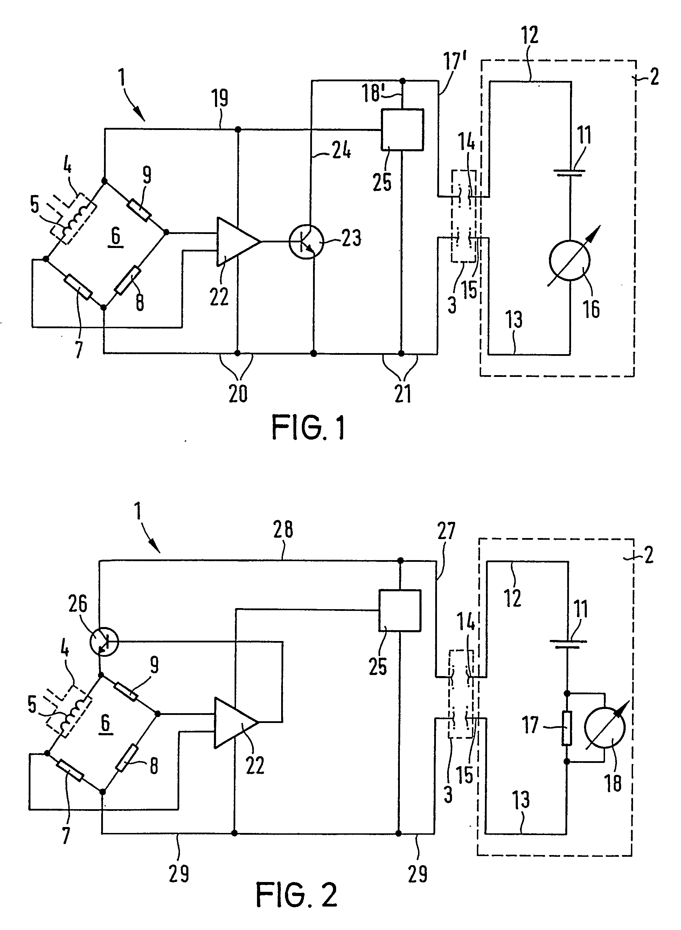

Die Fig. 1 und 2 zeigen ein ungeregeltes bzw. geregeltes Pirani-Vakuummeter nach der Erfindung. Die – stark schematisierten – Figuren zeigen jeweils links den Messkopf 1 und rechts das Bedienungsgerät 2 (gestrichelt dargestellt). Beide Teile sind durch ein je nach Anwendungsfall unterschiedlich langes Kabel 3 miteinander verbunden. Der Messkopf 1 umfasst die Messröhre 4, deren Innenraum mit einem nicht dargestellten Rezipienten verbunden ist, in dem der Druck zu messen, zu steuern oder zu überwachen ist. Innerhalb der Messröhre 4 befindet sich der Messdraht 5, der in die Wheatstonesche Messbrücke 6 mit den weiteren Widerständen 7, 8, 9 eingeschaltet ist.

Im Bedienungsgerät 2 ist eine Stromquelle 11 untergebracht, die über die Leitungsabschnitte 12 und 13 mit den beiden Leitern 14 und 15 des Kabels 3 verbunden ist. In dem dadurch gebildeten Teilstromkreis ist weiterhin ein Gerät zur Anzeige des fliessenden Stromes angeordnet. Beim Ausführungsbeispiel nach Fig. 1 ist ein Amperemeter 16 vorgesehen. Beim Ausführungsbeispiel nach Fig. 2 ist im Leitungsabschnitt 13 ein Widerstand 17 (eine sogenannte Bürde) eingeschaltet. Diese ist vom Voltmeter 18 überbrückt, so dass die über den Widerstand 17 abfallende Spannung, die dem durch den Widerstand 17 fliessenden Strom entspricht, abgelesen werden kann.

Beim ungeregelten Pirani nach Fig. 1 liegt an der Brücke 6 eine konstante Spannung an. Der Speisestromkreis für die Brücke 6 besteht deshalb im Messkopf 1 aus den Leitungsabschnitten 17', 18', 19, 20 und 21, wobei die Abschnitte 17' und 21 an das Kabel 3 angeschlossen sind. Bei Druckänderungen in der Messröhre 4 tritt eine Verstimmung der Brücke 6 auf, die über den Verstärker 22 auf den Transistor 23 übertragen wird.

Der Transistor 23 hat die Wirkung eines Widerstandes, dessen Widerstandswert sich in Abhängigkeit von der Verstimmung der Brücke 6 und damit in Abhängigkeit vom Druck in der Messröhre 4 ändert. Dadurch entsteht ein Messstromkreis im Messkopf 1, bestehend aus den Leitungsabschnitten 17', 24 und 21, ist also mit dem im Messkopf 1 liegenden Teil des Speisestromkreises teilweise identisch. Die im Bedienungsgerät 2 liegenden Teile von Messstromkreis und Speisestromkreis sind identisch. Die infolge eines sich ändernden Messstromes am Amperemeter 16 ablesbaren Stromveränderungen sind ein Mass für die in der Messröhre 4 herrschenden Druckverhältnisse. Zur Erzeugung einer konstanten Spannung im Messkopf 1 für die Speisung der Brücke 6 und für die Versorgung des Verstärkers 22 ist im Messkopf 1 noch der Spannungskonstanthalter 25 untergebracht.

Beim geregelten Pirani nach Fig. 2 dient der Verstärker 22 dazu, mit Hilfe des Transistors 26 dafür zu sorgen, dass an der Brücke 6 stets eine die Brücke abgleichende Spannung anliegt. Der Spannungskonstanthalter 25 ist lediglich für die Versorgung des Verstärkers 22 im Messkopf 1 vorgesehen. Beim geregelten Pirani-Vakuummeter nach Fig. 2 werden deshalb Messstromkreis und Speisestromkreis von den Leitungsabschnitten 27, 28 und 29 gebildet, sind also identisch. Der vom Messstrom überlagerte Speisestrom wird — wie beim Ausführungsbeispiel nach Fig. 1 — über das Kabel 3 zum Bedienungsgerät übertragen.

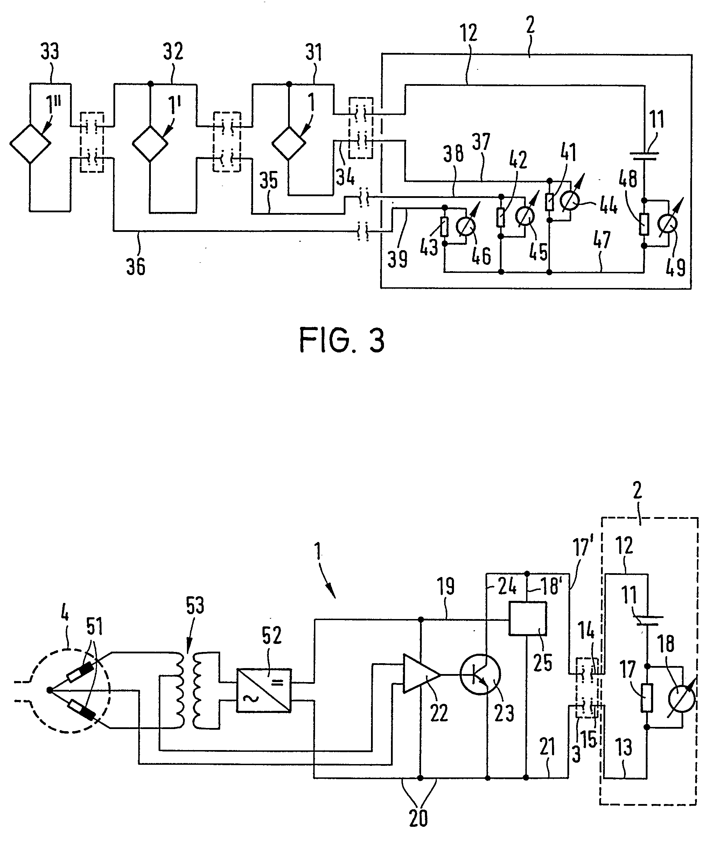

Beim Ausführungsbeispiel nach Fig. 3 sind an das Bedienungsgerät 2 insgesamt drei Messköpfe 1, 1', 1'' angeschlossen. Die auf die Spitze gestellten Blöcke sollen jeweils einen Messkopf 1, so wie er z. B. in den Fig. 1 oder 2 dargestellt ist, bedeuten. Für alle Messköpfe 1, 1', 1'' ist jeweils nur eine Speisestromquelle 11 im Bedienungsgerät 2 untergebracht. Es existiert für alle Messköpfe eine gemeinsame Hinleitung, bestehend aus dem im Anzeigegerät 2 befindlichen Abschnitt 12 und den ausserhalb befindlichen Abschnitten 31, 32 und 33. Als Rückleitung sind voneinander getrennte Leitungsabschnitte 34, 35 und 36 vorgesehen, die mit innerhalb des Anzeigegerätes liegenden Leitungsabschnitten 37, 38 und 39 verbunden sind. Diese Leitungsabschnitte enthalten jeweils wieder eine Bürde 41, 42 und 43 mit entsprechenden Voltmetern 44, 45 und 46 und sind dann gemeinsam über den Leitungsabschnitt 47 mit der Stromquelle 11 verbunden. Mittels der Voltmeter 44, 45 und 46 können die von den Messköpfen 1, 1', 1'' aufgenommenen Druckwerte angezeigt werden. Dabei ist unerheblich, ob die Messköpfe alle gleichgestaltet sind oder ob die Messköpfe nach verschiedenen Wärmeleitungsvakuummeter-Prinzipien (geregelt, ungeregelt, Pirani, thermoelektrisches Prinzip) arbeiten. Im Leitungsabschnitt 47 ist eine weitere Bürde 48 angeordnet, so dass am Voltmeter 49 ein mittlerer Druck abgelesen werden kann.

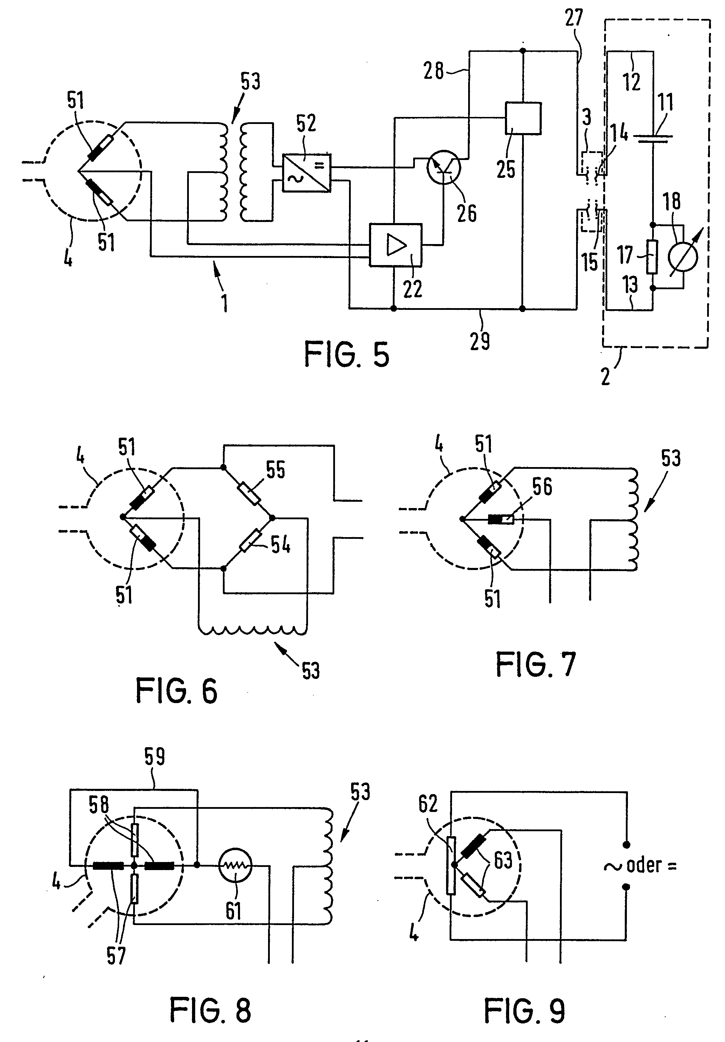

Die Fig. 4 und 5 zeigen ein ungeregeltes bzw. geregeltes, nach dem thermoelektrischen Prinzip arbeitendes Wärmeleitungsvakuummeter. Dazu sind in der Messröhre 4 zwei hintereinander geschaltete Thermoelemente 51 angeordnet, die mit Wechselstrom gespeist werden. Im Gleichstromspeisekreis des Messkopfes 1 des ungeregelten Vakuummeters nach Fig. 4, bestehend aus den Leitungsabschnitten 17', 18', 19, 20 und 21, ist deshalb ein Zerhacker 52 angeordnet, der den Transformator 53 mit Wechselstrom versorgt.

Dem Verstärker 22 werden zur Bildung des Messstromkreises (Abschnitte 17', 24, 21) Spannungsschwankungen zugeführt, die zwischen den beiden Thermoelementen 51 und etwa der Mitte der Sekundärseite des Transformators 53 abgenommen werden. Wesentlicher Unterschied zwischen den Ausführungsformen nach Fig. 1 und 2 und den Ausführungsformen nach Fig. 4 und 5 ist deshalb nur der Messwertaufnehmer. Alle übrigen Elemente tragen einander entsprechende Bezugszeichen.

Die Fig. 6, 7 und 8 zeigen weitere Messwertaufnehmer, die in der erfindungsgemässen Weise betrieben werden können. Beim Ausführungsbeispiel nach Fig. 6 sind wieder zwei Thermoelemente in der Messröhre 4 untergebracht. Sie bilden mit zwei ausserhalb der Messröhre 4 liegenden Widerständen 54 und 55 eine Wheatstone sche Brücke. Das dem in dieser Figur nicht dargestellten Verstärker 22 zuzuführende Signal wird an den jeweiligen Zwischenpunkten abgenommen.

Beim Ausführungsbeispiel nach Fig. 7 ist ausser den beiden Thermoelementen 51 noch ein drittes Thermoelement 56 in der Messröhre 4 angeordnet. Zwischen den Thermoelementen 51 und etwa in der Mitte der Sekundärseite des Transformators 53 wird das Messsignal abgenommen, und zwar über das Thermoelement 56, das zur Kompensation der Raumtemperatur dient.

Beim Ausführungsbeispiel nach Fig. 8 sind zwei Thermoelemente 57, 58 derart miteinander verbunden, dass ihre Mitten jeweils Kontakt haben. Beide Thermoelemente 57 und 58 sind in der Messröhre 4 untergebracht. Ein Endenpaar ist mit der Sekundärseite des Transformators 53 verbunden. Das andere Endenpaar ist durch eine Leitung 59 überbrückt. Zwischen der Mitte der Sekundärseite des Transformators 53 und der Überbrückungsleitung 59 wird das dem Verstärker 22 zuzuführende Signal abgenommen. Zur Raumtemperaturkompensation ist zusätzlich ein Thermistor 61 vorgesehen.

Fig. 9 zeigt schliesslich noch die allgemeinste Form eines Messwertaufnehmers, der mit Gleich- oder Wechselstrom betrieben werden kann. Er besteht aus einem temperaturempfindlichen Widerstand 62 in der Messröhre 4, dessen Temperatur mit Hilfe des Thermoelementes 63 zur Bildung eines Messsignals gemessen wird.

## Patentansprüche

1. Wärmeleitungsvakuummeter mit mindestens einem eintemperaturabhängiges Widerstandselement (5, 51, 58) enthaltenden Messkopf (1), einem ein Anzeigegerät (16, 17/18) sowie eine Speisestromquelle (11) enthaltenden Bedienungsgerät (2) und einem mehrere Leitungen (14, 15) enthaltenden Verbindungskabel (3) sowie mit einem Speisestromkreis (11, 12, 14, 17', 18', 19, 20, 21, 15, 13, 16 bzw. 11, 12, 14, 27, 28, 26, 29, 15, 13, 17/18) und einem Messstromkreis (11, 12, 14, 17', 24, 23, 21, 15, 13, 16 bzw. 11, 12, 14, 27, 28, 26, 29, 15, 13, 17/18), wobei der Speisestromkreis einen im Bedienungsgerät liegenden Teil (11, 12, 13, 16 bzw. 11, 12, 13, 17/18) sowie einen im Messkopf liegenden Teil (17', 18', 19, 20, 21 bzw. 27, 28, 26, 29) und der Messstromkreis einen im Bedienungsgerät liegenden Teil (11, 12, 13, 16 bzw. 11, 12, 13, 17/18) sowie einen im Messkopf liegenden Teil (17', 24, 23, 21 bzw. 27, 28, 26, 29) aufweisen, dadurch gekennzeichnet, dass für die im Bedienungsgerät (2) befindlichen Teile des Messstromkreises und des Speisestromkreises ein und derselbe Teilstromkreis (11, 12, 13, 16 bzw. 11, 12, 13, 17/18) verwendet wird.

2. Wärmeleitungsvakuummeter nach Anspruch 1, dadurch gekennzeichnet, dass auch für die im Messkopf (1) befindlichen Teile des Messstromkreises und des Speisestromkreises ein und derselbe Teilstromkreis (27, 28, 26, 29) verwendet wird.

3. Wärmeleitungsvakuummeter nach Anspruch 1 oder 2, dadurch gekennzeichnet, dass zur Anzeige des im gemeinsamen Teilstromkreis im Bedienungsgerät (2) fliessenden, sich aus einem Messstromanteil und einem Speisestromanteil zusammensetzenden Stromes ein Amperemeter (16) oder eine Bürde (17) mit einem Voltmeter (18) vorgesehen sind.

4. Wärmeleitungsvakuummeter nach Anspruch 1, dadurch gekennzeichnet, dass am Bedienungsgerät (2) mehrere Messköpfe (1, 1', 1'') angeschlossen sind und dass für die Bildung der Speisestromkreise und der Messstromkreise eine gemeinsame Hinleitung (31, 32, 33) und pro Messkopf je eine Rückleitung (34, 35, 36) vorgesehen sind.

5. Wärmeleitungsvakuummeter nach Anspruch 4, dadurch gekennzeichnet, dass im Bedienungsgerät (2) jeder der Rückleitungen (34, 35, 36) ein Leitungsabschnitt (37, 38, 39) mit einer Strommesseinrichtung (41, 44 bzw. 42, 45 bzw. 43, 46) zugeordnet ist.

6. Wärmeleitungsvakuummeter nach Anspruch 5, dadurch gekennzeichnet, dass die Leitungsabschnitte (37, 38, 39) über einen gemeinsamen Leitungsabschnitt (47) mit der Stromquelle (11) verbunden sind und dass in diesem gemeinsamen Leitungsabschnitt eine weitere Strommesseinrichtung (48, 49) angeordnet ist.

## Claims

1. A heat-conducting vacuum gauge comprising: a measuring head (1) containing a temperature-dependent resistor element (5, 51, 58); an operating instrument (2) containing an indicating means (16, 17/18) and a supply-current source (11); and a connecting cable (3) containing a plurality of leads (14, 15), the vacuum gauge also comprising a supply-current circuit (11, 12, 14, 17', 18', 19, 20, 21, 15, 13, 16; 11, 12, 14, 27, 28, 26, 29, 15, 13, 17/18) and a measuring circuit (11, 12, 14, 17', 24, 23, 21, 15, 13, 16; 11, 12, 14, 27, 28, 26, 29, 15, 13, 17/18), the supply circuit having a part (11, 12, 13, 16; 11, 12, 13, 17/18) disposed in the operating instrument as well as a part (17', 18', 19, 20, 21; 27, 28, 26, 29) disposed in the measuring head, and the measuring current circuit having a part (11, 12, 13, 16; 11, 12, 13, 17/18) disposed in the operating instrument, as well as a part (17', 24, 23, 21; 27, 28, 26, 29) disposed in the measuring head, characterized in that one and the same partial circuit (11, 12, 13, 16; 11, 12, 13, 17/18) is used for the parts of the measuring current circuit and of the supply current circuit that are contained in the operating instrument (2).

2. A heat-conducting vacuum gauge according to Claim 1, characterized in that one and the same partial circuit (27, 28, 26, 29) is also used for the parts of the measuring current circuit and the supply current circuit that are contained in the measuring head (1).

3. A heat-conducting vacuum gauge according to Claim 1 or 2, characterized in that an ammeter (16) or an ohmic resistor (17) with a voltmeter (18) are provided for indicating the current which flows in the common partial circuit in the operating instrument (2) and which is composed of a measuring current portion and a supply current portion.

4. A heat-conducting vacuum gauge according to Claim 1, characterized in that a plurality of measuring heads (1, 1', 1'') are connected to the measuring instrument (2) and in that, for the purpose of forming the supply current circuits and the measuring current circuits, a common outgoing lead (31, 32, 33) is provided and a return lead (34, 35, 36) is provided for each measuring head.

5. A heat-conducting vacuum gauge according to Claim 4, characterized in that, in the operating instrument (2), a lead portion (37, 38, 39) with a current-measuring device (41, 44; 42, 45; 43, 46) is associated with each of the return leads (34, 35, 36).

6. A heat-conducting vacuum gauge according to Claim 5, characterized in that the lead portions (37, 38, 39) are connected to the current source (11) by way of a common lead portion (47), and in that a further current-measuring device is arranged in this common lead portion.

**Revendications**

1. Manomètre à vide du type à conductivité thermique, qui possède au moins une tête de mesure (1) contenant un élément à résistance variable avec la température (5, 51, 58), un appareil de commande (2) contenant un appareil indicateur (16, 17/18) et une source de courant d'alimentation (11), un câble de liaison (3) contenant plusieurs conducteurs (14, 15), ainsi qu'un circuit électrique d'alimentation (11, 12, 14, 17', 18', 19, 20, 21, 15, 13, 16 respectivement 11, 12, 14, 27, 28, 26, 29, 15, 13, 17/18) et un circuit électrique de mesure (11, 12, 14, 17', 24, 23, 21, 15, 13, 16 respectivement 11, 12, 14, 27, 28, 26, 29, 15, 13, 17/18), le circuit d'alimentation comprenant une partie (11, 12, 13, 16 respectivement 11, 12, 13, 17/18) située dans l'appareil de commande et une partie (17', 18', 19, 20, 21 respectivement 27, 28, 26, 29) située dans la tête de mesure et le circuit de mesure comprenant une partie (11, 12, 13, 16 respectivement 11, 12, 13, 17/18) située dans l'appareil de commande et une partie (17', 24, 23, 21 respectivement 27, 28, 26, 29) située dans la tête de mesure, caractérisé en ce qu'un seul et même circuit électrique partiel (11, 12, 13, 16 respectivement 11, 12, 13, 17/18) est utilisé pour les parties du circuit de mesure et du circuit d'alimentation situées dans l'appareil de commande (2).

2. Manomètre selon la revendication 1, caractérisé en ce qu'un seul et même circuit électrique partiel (27, 28, 26, 29) est utilisé également pour les parties du circuit de mesure et du circuit d'alimentation situées dans la tête de mesure (1).

3. Manomètre selon la revendication 1 ou 2, caractérisé en ce qu'un ampèremètre (16) ou une charge (17) avec un voltmètre (18) sont prévus pour indiquer l'intensité du courant circulant dans le circuit électrique partiel commun dans l'appareil de commande (2), se composant d'une partie du circuit de mesure et d'une partie du circuit d'alimentation.

4. Manomètre selon la revendication 2, caractérisé en ce que plusieurs têtes de mesure (1, 1', 1'') sont raccordées à l'appareil de commande (2) et en ce qu'une ligne aller commune (31, 32, 33) et une ligne de retour (34, 35, 36) par tête de mesure sont prévues pour la formation des circuits d'alimentation et des circuits de mesure.

5. Manomètre selon la revendication 4, caractérisé en ce qu'un tronçon de ligne (37, 38, 39) avec un dispositif de mesure du courant (41, 44 respectivement 42, 45 respectivement 43, 46) est coordonné dans l'appareil de commande (2) à chacune des lignes de retour (34, 35, 36).

6. Manomètre selon la revendication 5, caractérisé en ce que les tronçons de ligne (37, 38, 39) sont connectés à travers un tronçon de ligne (47) à la source de courant (11) et en ce qu'un dispositif de mesure du courant supplémentaire (48, 49) est disposé dans ce tronçon de ligne commun.

FIG. 1

FIG. 2

7

**FIG. 3**

**FIG. 4**

FIG. 5

FIG. 6

FIG. 7

FIG. 8

FIG. 9

~ oder =